# FASCICULE DE BREVET EUROPEEN

(11) **EP 3 032 729 B1**
(45) Date de publication et mention de la délivrance du brevet: **10.01.2018**
(21) Numéro de dépôt: 15198109.9
(22) Date de dépôt: 04.12.2015
(51) Int. Cl.: H02M 3/07

(54) **CONVERTISSEUR CONTINU-CONTINU À DÉMARRAGE À FROID**
GLEICHSTROM-GLEICHSTROM-WANDLER MIT KALTSTART
DC-DC CONVERTER WITH COLD STARTING

(30) Priorité: 08.12.2014 FR 1462060
(43) Date de publication de la demande: 15.06.2016
(73) Titulaire: COMMISSARIAT À L'ÉNERGIE ATOMIQUE ET AUX ÉNERGIES ALTERNATIVES, 75015 Paris (FR)
(72) Inventeur: PILLONNET, Gaël, 38360 Sassenage (FR); MARTINEZ, Thomas, 92200 Neuilly sur Seine (FR)
(74) Mandataire: Thibon, Laurent

(56) Documents cités:
- FR-A1- 2 884 072
- US-A1- 2002 154 524
- US-A1- 2008 013 349
- US-A1- 2011 050 328

## Description

### Domaine

La présente demande concerne un convertisseur de tension continu-continu.

### Exposé de l'art antérieur

Un convertisseur de tension continu-continu peut être utilisé dans un système électronique de récupération d'énergie. Un tel système comprend généralement un transducteur adapté à convertir de l'énergie non électrique, par exemple de l'énergie thermique, de l'énergie mécanique, de l'énergie radiative, etc., en énergie électrique, généralement délivrée sous basse tension, et un convertisseur continu-continu adapté à convertir cette tension basse en une tension plus élevée, par exemple à des fins de stockage d'énergie ou d'alimentation d'un circuit électronique.

Il est généralement souhaitable que le système électronique de récupération d'énergie puisse fonctionner, et en particulier démarrer, sans apport d'énergie extérieure autre que l'énergie électrique recueillie par le transducteur. Un tel démarrage est appelé démarrage à froid. En particulier, il peut être souhaitable que le convertisseur continu-continu puisse démarrer à froid même lorsque la tension fournie par le transducteur est faible, par exemple inférieure à la tension de seuil des jonctions semiconductrices qui est d'environ 300 mV.

Il existe des convertisseurs de tension continu-continu à démarrage à froid mettant en oeuvre des composants électroniques, tels que des transformateurs électriques ou des diodes à effet tunnel, qui ne peuvent pas être réalisés de façon simple par des technologies classiques de fabrication de transistors à effet de champ de type métal-oxyde-semiconducteur, également appelés transistors MOS.

Il serait toutefois souhaitable que le convertisseur continu-continu puisse être réalisé par des technologies classiques de fabrication de transistors MOS, notamment pour en réduire le coût de fabrication.

Le document US 2002/154524 décrit un circuit à pompe de charges.

### Résumé

Un objet d'un mode de réalisation est de pallier tout ou partie des inconvénients des convertisseurs de tension continu-continu à démarrage à froid décrits précédemment.

Un autre objet d'un mode de réalisation est que le convertisseur continu-continu puisse démarrer à froid en étant alimenté seulement par une tension faible, notamment inférieure à 300 mV.

Un autre objet d'un mode de réalisation est que le convertisseur continu-continu comprenne seulement des composants électroniques pouvant être réalisés par des technologies classiques de fabrication de transistors MOS.

Ainsi, un mode de réalisation prévoit un convertisseur continu-continu selon la revendication 1.

Selon un mode de réalisation, le circuit oscillant comprend un oscillateur en anneau.

Selon un mode de réalisation, le premier circuit à pompe de charges comprend une première borne destinée à recevoir une première tension, au moins un condensateur et au moins un chemin de conduction entre la première borne et une électrode du condensateur comprenant seulement l'un des premiers transistors MOS à appauvrissement ou seulement desdits premiers transistors MOS à appauvrissement en série.

Selon un mode de réalisation, le circuit oscillant est alimenté par la première tension.

Selon un mode de réalisation, le premier circuit à pompe de charges est destiné à fournir une deuxième tension et le circuit oscillant est alimenté par la deuxième tension.

Selon un mode de réalisation, le premier circuit à pompe de charges comprend, en outre, une deuxième borne destinée à fournir la deuxième tension et le premier circuit à pompe de charges comprend au moins un chemin de conduction entre la première borne et la deuxième borne comprenant seulement desdits premiers transistors MOS à appauvrissement en série.

Selon un mode de réalisation, le convertisseur comprend un deuxième circuit à pompe de charges comprenant des deuxièmes transistors MOS dont des deuxièmes transistors MOS à appauvrissement, le circuit oscillant étant relié au deuxième circuit à pompe de charges seulement aux grilles d'au moins certains des deuxièmes transistors MOS dont les deuxièmes transistors MOS à appauvrissement, le deuxième circuit à pompe de charges comprenant une troisième borne destinée à recevoir la première tension et une quatrième borne destinée à fournir une troisième tension de signe opposé à la première tension, et le circuit oscillant est alimenté entre la deuxième tension et la troisième tension.

Selon un mode de réalisation, le convertisseur comprend un troisième circuit à pompe de charges comprenant seulement des troisièmes transistors MOS à enrichissement, le circuit oscillant étant, en outre, relié au troisième circuit à pompe de charges seulement aux grilles d'au moins certains des troisièmes transistors MOS à enrichissement, le troisième circuit à pompe de charges comprenant une cinquième borne destinée à recevoir la première tension et une sixième borne destinée à fournir une quatrième tension de même signe que la première tension.

Selon un mode de réalisation, le convertisseur comprend, en outre, un circuit de commutation adapté à alimenter successivement le circuit oscillant avec la deuxième tension et avec la quatrième tension.

Un mode de réalisation prévoit également un système électronique de récupération d'énergie comprenant un transducteur adapté à fournir une tension à partir d'une source d'énergie et un convertisseur tel que défini précédemment, le circuit à pompe de charges recevant ladite tension.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous la forme d'un schéma-bloc, un mode de réalisation d'un convertisseur continu-continu à démarrage à froid ;
la figure 2 est un schéma électrique plus détaillé d'un mode de réalisation du convertisseur de la figure 1 ;
la figure 3 est un schéma électrique de détail d'un élément du convertisseur de la figure 2 ;
la figure 4 représente une courbe d'évolution du courant de drain d'un transistor MOS à appauvrissement en fonction de la tension grille-source ;
les figures 5 et 6 sont des schémas électriques d'une partie du convertisseur de la figure 2 à deux étapes successives de fonctionnement du convertisseur ;
la figure 7 représente des courbes d'évolution du rapport de transformation du convertisseur en fonction de la tension reçue par le convertisseur respectivement pour le convertisseur de la figure 2 et pour un convertisseur à transistors à enrichissement ;
les figures 8, 9 et 10 sont des schémas électriques d'autres modes de réalisation d'un convertisseur continu-continu à démarrage à froid ;
la figure 11 représente des courbes d'évolution du rapport de transformation du convertisseur en fonction de la tension reçue par le convertisseur respectivement pour le convertisseur de la figure 10 et pour un convertisseur à transistors à enrichissement ;
les figures 12 et 13 sont des schémas électriques d'autres modes de réalisation d'un convertisseur continu-continu à démarrage à froid ;
la figure 14 représente des courbes d'évolution du rapport de transformation du convertisseur en fonction de la tension reçue par le convertisseur respectivement pour le convertisseur de la figure 13 et pour un convertisseur à transistors à enrichissement ;
les figures 15 et 16 sont des schémas électriques d'autres modes de réalisation d'un convertisseur continu-continu à démarrage à froid ; et
la figure 17 représente un mode de réalisation d'un système de récupération d'énergie.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, la structure d'un transducteur est bien connue de l'homme du métier et n'a pas été décrite en détail. Sauf précision contraire, les expressions "approximativement", "sensiblement", et "de l'ordre de" signifient à 10 % près, de préférence à 5 % près. De plus, on appelle "signal binaire" un signal qui alterne entre un premier état constant, par exemple un état bas, noté "0", et un deuxième état constant, par exemple un état haut, noté "1". Les états haut et bas de signaux binaires d'un même circuit électronique peuvent être différents. En pratique, les signaux binaires peuvent correspondre à des tensions ou à des courants qui peuvent ne pas être parfaitement constants à l'état haut ou bas. Dans la suite de la description, on appelle "bornes de puissance" d'un transistor MOS la source et le drain du transistor MOS. Par ailleurs, dans la présente description, on utilise le terme "connecté" pour désigner une liaison électrique directe, sans composant électronique intermédiaire, par exemple au moyen d'une piste conductrice, et le terme "couplé" ou le terme "relié", pour désigner soit une liaison électrique directe (signifiant alors "connecté") soit une liaison via un ou plusieurs composants intermédiaires (résistance, condensateur, etc.).

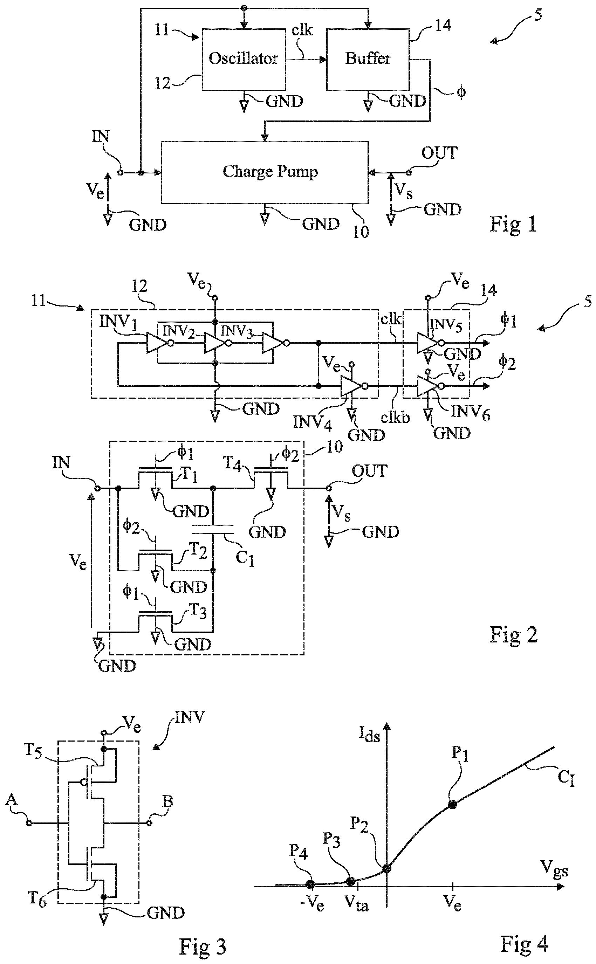

La figure 1 représente, sous la forme d'un schéma-bloc, un mode de réalisation d'un convertisseur 5 comprenant :
un circuit à pompe de charges 10 (Charge Pump) recevant une tension Vₑ à un noeud d'entrée IN et fournissant une tension Vₛ à un noeud de sortie OUT ; et
un circuit oscillant 11 fournissant au moins un signal numérique de commande φ au circuit à pompe de charges 10.

Le circuit oscillant 11 peut comprendre :
un oscillateur 12 (Oscillator) fournissant au moins un signal d'horloge clk ; et
un circuit d'interface 14 (Buffer) recevant le signal d'horloge clk et fournissant le signal numérique de commande φ.

Dans le présent mode de réalisation, l'oscillateur 12 et le circuit d'interface 14 sont alimentés par la tension d'entrée Vₑ et sont, en outre, reliés à une source d'un potentiel de référence GND, par exemple la masse, qui est pris égal à 0 V dans la suite de la description.

La tension Vₑ est une tension continue, pouvant varier dans le temps, fournie par un dispositif électronique, non représenté. Il peut s'agir de la tension fournie par un transducteur adapté à transformer en énergie électrique une autre forme d'énergie, par exemple de l'énergie thermique, de l'énergie mécanique ou de l'énergie radiative. La tension Vₑ peut être inférieure à 300 mV, par exemple comprise entre 100 mV et 200 mV. Dans la suite de la description, les tensions Vₑ et Vₛ sont référencées par rapport à la masse GND.

La tension Vₛ fournie par le circuit à pompe de charges 10 est égale au produit de la tension Vₑ et d'un rapport de transformation k, positif ou négatif, qui dépend de la structure du circuit à pompe de charges 10. La borne OUT peut être reliée à une charge dissipative, par exemple pour l'alimentation d'un dispositif électronique, et/ou à une charge capacitive, par exemple pour le stockage d'énergie.

Le signal d'horloge clk et le signal de commande φ sont des signaux binaires. Le signal de commande φ alterne entre la tension Vₑ et 0 V.

Le circuit d'interface 14 est adapté à mettre en forme le signal d'horloge clk pour fournir le signal de commande φ sous une forme adaptée au circuit à pompe de charges 10. A titre de variante, le circuit d'interface 14 peut ne pas être présent, le signal d'horloge clk pouvant alors directement être utilisé comme signal de commande.

Selon un mode de réalisation, le circuit à pompe de charges 10 comprend des transistors MOS à appauvrissement dont les grilles sont commandées par le signal de commande φ. Un transistor à appauvrissement est un transistor pour lequel un canal conducteur est présent entre la source et le drain même lorsque la grille est à 0 V. La tension de seuil d'un transistor MOS à appauvrissement à canal N est négative.

Le circuit à pompe de charges 10 comprend au moins un condensateur. Le chemin de conduction ou les chemins de conduction entre le noeud d'entrée IN et l'une des électrodes du condensateur n'est formé que par les canaux de transistors MOS à appauvrissement dont les grilles sont commandées par le circuit oscillant. Les signaux de commande φ fournis par le circuit d'interface 14 ne sont fournis qu'à des grilles de transistors MOS. Ceci permet de réduire le courant à fournir par le circuit d'interface 14 et permet d'assurer, de façon avantageuse que le circuit à pompe de charges fonctionne lors d'un démarrage à froid même si la tension Vₑ est faible.

De préférence, au moins un chemin de conduction entre le noeud d'entrée IN et le noeud de sortie OUT n'est formé que par les canaux de transistors MOS à appauvrissement dont les grilles sont commandées par le circuit oscillant. Ceci permet de façon avantageuse, lors d'un démarrage à froid, que le convertisseur 10 fournisse une tension Vₛ différente de 0 V dès que la tension Vₑ est différente de 0 V.

Selon un mode de réalisation, le circuit à pompe de charges 10 ne comprend que des transistors MOS et au moins un condensateur. Selon un mode de réalisation, tous les transistors MOS du circuit à pompe de charges 10 sont des transistors MOS à appauvrissement. Selon un autre mode de réalisation, le circuit à pompe de charges 10 comprend au moins un transistor MOS à appauvrissement et des transistors MOS à enrichissement.

La figure 2 représente un mode de réalisation plus détaillé du convertisseur 5 de la figure 1 dans lequel l'oscillateur 12 est un oscillateur en anneau, dans lequel le circuit à pompe de charges 10 est un doubleur de tension et dans lequel le circuit d'interface 14 comprend des inverseurs.

Dans ce mode de réalisation, le circuit à pompe de charges 10 comprend quatre transistors MOS à appauvrissement T₁, T₂, T₃ et T₄ à canal N et un condensateur C₁. Une première borne de puissance du transistor T₁ est reliée au noeud d'entrée IN et la deuxième borne de puissance du transistor T₁ est reliée à une première électrode du condensateur C₁. La grille du transistor T₁ reçoit un premier signal de commande φ₁. Une première borne de puissance du transistor T₂ est reliée au noeud d'entrée IN et la deuxième borne de puissance du transistor T₂ est reliée à la deuxième électrode du condensateur C₁. La grille du transistor T₂ reçoit un deuxième signal de commande φ₂. Une première borne de puissance du transistor T₃ est reliée à la deuxième électrode du condensateur C₁ et la deuxième borne de puissance du transistor T₃ est reliée à la masse GND. La grille du transistor T₃ reçoit le premier signal de commande φ₁. Une première borne de puissance du transistor T₄ est reliée à la première électrode du condensateur C₁ et la deuxième borne de puissance du transistor T₄ est reliée au noeud de sortie OUT. La grille du transistor T₄ reçoit le deuxième signal de commande φ₂. Le substrat (en anglais bulk) de chaque transistor MOS T₁ à T₄ est relié à la masse GND.

L'oscillateur 12 comprend une succession d'un nombre impair d'inverseurs montés en série, la sortie du dernier inverseur de la succession d'inverseurs étant connectée à l'entrée du premier inverseur de la succession d'inverseurs. Trois inverseurs INV₁, INV₂, INV₃ montés en série sont représentés en figure 2, la sortie de l'inverseur INV₃ étant connectée à l'entrée de l'inverseur INV₁. L'inverseur INV₃ fournit le signal d'horloge clk. L'oscillateur 12 comprend, en outre, un inverseur INV₄ dont l'entrée est connectée à la sortie de l'inverseur INV₃, et fournissant un signal d'horloge clkb. Chaque signal d'horloge clk, clkb est un signal binaire. Les signaux clk et clkb sont complémentaires. La période du signal clk dépend notamment de la tension Vₑ d'alimentation de l'oscillateur 12 et du nombre d'inverseurs montés en série.

Le circuit d'interface 14 comprend un inverseur INV₅ recevant le signal clk et fournissant le signal de commande φ₁. Le circuit d'interface 14 comprend un inverseur INV₆ recevant le signal clkb et fournissant le signal de commande φ₂. Chaque inverseur INV₁ à INV₆ est relié à un noeud de fourniture de la tension Vₑ et est relié à la masse GND.

La figure 3 représente un mode de réalisation d'un inverseur INV. Chaque inverseur INV₁ à INV₆ peut avoir la structure représentée en figure 3. L'inverseur INV comprend un noeud d'entrée A et un noeud de sortie B. L'inverseur INV comprend un transistor MOS T₅, par exemple un transistor MOS à enrichissement à canal P, dont la source est reliée à un noeud de fourniture de la tension Ve, dont le drain est relié au noeud B et dont la grille est reliée au noeud A. Le substrat du transistor T₅ est relié à un noeud de fourniture de la tension Ve. L'inverseur INV comprend, en outre, un transistor MOS T₆, par exemple un transistor MOS à enrichissement à canal N, dont la source est reliée à la masse GND, dont le drain est relié au noeud B et dont la grille est reliée au noeud A. Le substrat du transistor T₆ est relié à la masse GND.

Le principe de fonctionnement du circuit à pompe de charges 10 selon le mode de réalisation représenté en figure 2 va maintenant être décrit en relation avec les figures 4 à 6.

En fonctionnement normal, le circuit d'interface 14 fournit les signaux de commande binaires φ₁ et φ₂ qui sont complémentaires. Dans le présent mode de réalisation, chaque signal φ₁ et φ₂ correspond à une tension qui alterne sensiblement entre la tension Vₑ et 0 V. En régime établi, le circuit à pompe de charges 10 fournit une tension Vₛ qui est proportionnelle à Vₑ, le rapport de transformation k étant en théorie égal à 2 et, en pratique, légèrement inférieur à 2.

La figure 4 est une courbe C_{I} d'évolution du courant drain-source I_{ds} d'un transistor MOS à appauvrissement à canal N en fonction de la tension grille-source V_{gs} en régime ohmique. On a représenté quatre points de polarisation P1 à P4 sur la courbe C_{I}.

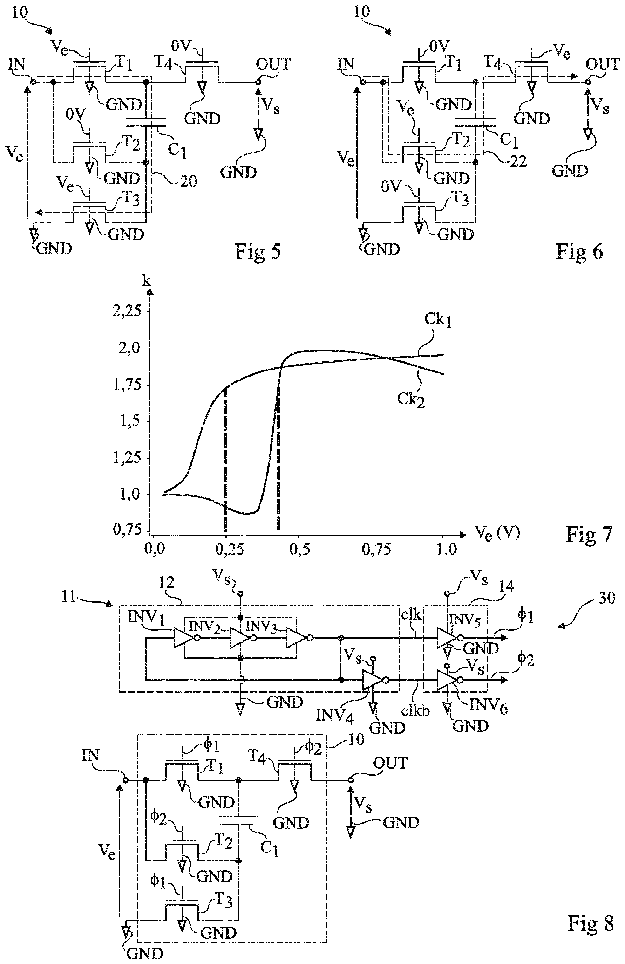

La figure 5 illustre l'état de conduction de chaque transistor MOS T₁ à T₄ lorsque le signal de commande φ₁ est à Vₑ et que le signal de commande φ₂ est à 0 V. Le transistor T₁ est sensiblement au point de polarisation P₂, les transistors T₃ et T₄ sont sensiblement au point de polarisation P₄ et le transistor T₃ est sensiblement au point de polarisation P₁. Le courant circule alors de façon préférentielle selon la ligne tiretée 20. Le condensateur C₁ est alors chargé sous la tension Vₑ.

La figure 6 illustre l'état de conduction de chaque transistor MOS T₁ à T₄ lorsque le signal de commande φ₂ est à Vₑ et que le signal de commande φ₁ est à 0 V. Le transistor T₂ est au point de polarisation P₁, les transistors T₁ et T₃ sont au point de polarisation P₄ et le transistor T₄ est au point de polarisation P₃. Le courant circule alors de façon préférentielle selon la ligne tiretée 22, ce qui conduit à une décharge du condensateur C₁ vers le noeud de sortie OUT. La tension Vₛ au noeud de sortie OUT est maintenue sensiblement à environ k*Vₑ, k étant proche de 2 en régime établi dans le présent mode de réalisation.

La figure 7 représente des courbes d'évolution Ck₁ et Ck₂, en fonction de la tension Vₑ, des rapports de transformation k₁ et k₂ en régime établi respectivement du convertisseur 5 représenté en figure 2 et d'un convertisseur ayant la même structure que le convertisseur 5 à la différence que les transistors T₁ à T₄ sont remplacés par des transistors MOS à enrichissement à canal N. Les courbes Ck₁ et Ck₂ ont été obtenues pour des transistors MOS dont la longueur de canal était de 0,18 µm.

Pour les courbes Ck₁ et Ck₂, le rapport de transformation k₁ et k₂ du convertisseur 5 diminue lorsque la tension Vₑ diminue. Toutefois, la diminution est plus rapide lorsque des transistors MOS à enrichissement sont utilisés. En effet, le rapport de transformation k₂ diminue en dessous de 1,75 dès que la tension Vₑ diminue en dessous de 420 mV alors que le rapport de transformation k₁ diminue en dessous de 1,75 seulement lorsque la tension Vₑ diminue en dessous de 250 mV. Le présent mode de réalisation permet donc de faire fonctionner le convertisseur DC-DC à une tension d'entrée inférieure à ce qui peut être obtenu avec un convertisseur de même structure composé de transistors MOS à enrichissement.

La figure 8 représente un autre mode de réalisation d'un convertisseur continu-continu 30. Le convertisseur 30 comprend l'ensemble des éléments du convertisseur 5 à la différence que les inverseurs INV₁ à INV₆ sont alimentés par la tension Vₛ au lieu de recevoir la tension Vₑ.

En fonctionnement normal, la tension Vₛ est supérieure à la tension Vₑ. L'alimentation du circuit oscillant 11 du convertisseur 30 est, de façon avantageuse, plus efficace que celle du convertisseur 5. En outre, la conductivité des transistors MOS T₁ à T₄ du convertisseur 30 est augmentée lorsque leurs grilles sont amenées à Vₛ à l'état passant par rapport aux transistors MOS T₁ à T₄ du convertisseur 30 dont les grilles sont amenées seulement à Vₑ à l'état passant.

Lorsque la tension Vₑ augmente depuis la valeur nulle, l'oscillateur 12 du convertisseur 30 ne peut pas démarrer tant que la tension de sortie Vs est inférieure à la tension de démarrage de l'oscillateur 12. Le courant circule alors directement par les transistors T₁ et T₄ du circuit à pompe de charges 10 de sorte que la tension Vₛ s'élève jusqu'à être sensiblement égale à la tension Vₑ. Dès que la tension Vₛ a atteint la tension de démarrage de l'oscillateur 12, le fonctionnement du convertisseur 30 se poursuit comme cela a été décrit précédemment pour le convertisseur 5 en relation avec les figures 4 à 6.

En outre, dès que l'oscillateur 12 a démarré, la tension Vₛ devient supérieure à Vₑ, de sorte que la fréquence d'oscillation de l'oscillateur 12 augmente plus rapidement que si l'oscillateur 12 était alimenté par la tension Vₑ et la vitesse d'évolution du rapport de transformation du circuit à pompe de charges 10 est augmentée.

De façon générale, le circuit à pompe de charges 10 peut correspondre à tout type de circuit à pompe de charges élévateur de tension, abaisseur de tension ou inverseur de tension.

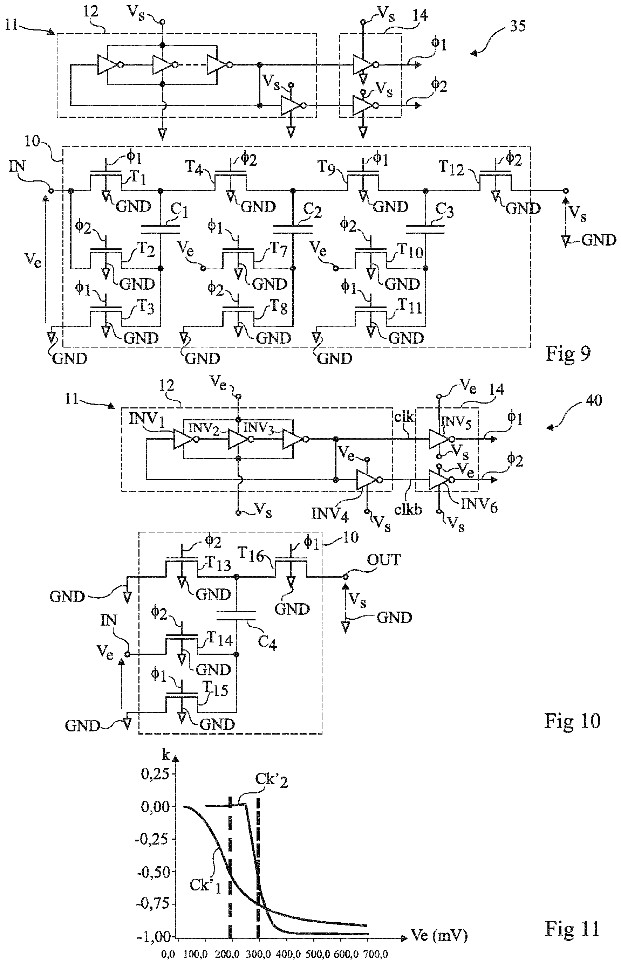

La figure 9 représente, à titre d'exemple, un autre mode de réalisation d'un convertisseur 35 dans lequel le circuit à pompe de charges 10 est un élévateur de tension dont le rapport de transformation est d'environ 4. Le circuit à pompe de charges 10 du convertisseur 35 comprend les transistors T₁ à T₄ et le condensateur C₁ décrits précédemment en relation avec la figure 2 et comprend, en outre, des transistors MOS à appauvrissement T₇ à T₁₂ à canal N et des condensateurs C₂ et C₃.

La borne de puissance du transistor T₄ qui n'est pas reliée au condensateur C₁ est reliée à une première électrode du condensateur C₂. Une première borne de puissance du transistor T₇ est reliée au noeud d'entrée IN et la deuxième borne de puissance du transistor T₇ est reliée à la deuxième électrode du condensateur C₂. La grille du transistor T₇ reçoit le premier signal de commande φ₁. Une première borne de puissance du transistor T₈ est reliée à la masse GND et la deuxième borne de puissance du transistor T₈ est reliée à la deuxième électrode du condensateur C₂. La grille du transistor T₈ reçoit le deuxième signal de commande φ₂. Une première borne de puissance du transistor T₉ est reliée à la première électrode du condensateur C₂ et la deuxième borne de puissance du transistor T₉ est reliée à une première électrode du condensateur C₃. La grille du transistor T₉ reçoit le premier signal de commande φ₁. Une première borne de puissance du transistor T₁₀ est reliée au noeud d'entrée IN et la deuxième borne de puissance du transistor T₁₀ est reliée à la deuxième électrode du condensateur C₃. La grille du transistor T₁₀ reçoit le deuxième signal de commande φ₂. Une première borne de puissance du transistor T₁₁ est reliée à la masse GND et la deuxième borne de puissance du transistor T₁₁ est reliée à la deuxième électrode du condensateur C₃. La grille du transistor T₁₁ reçoit le premier signal de commande φ₁. Une première borne de puissance du transistor T₁₂ est reliée à la première électrode du condensateur C₃ et la deuxième borne de puissance du transistor T₁₂ est reliée au noeud de sortie OUT. La grille du transistor T₁₂ reçoit le deuxième signal de commande φ₂.

La figure 10 représente un autre mode de réalisation d'un convertisseur 40. Le convertisseur 40 comprend l'ensemble des éléments du convertisseur 35, représenté en figure 9, à la différence que le circuit à pompe de charges 10 est un inverseur de tension dont le rapport de transformation k est d'environ -1 et que l'oscillateur 12 et le circuit d'interface 14 sont reliés au noeud de sortie OUT fournissant la tension Vₛ au lieu d'être reliés à la masse GND.

Le circuit à pompe de charges 10 du convertisseur 40 comprend quatre transistors MOS à appauvrissement T₁₃, T₁₄, T₁₅ et T₁₆ à canal N et un condensateur C₄. Une première borne de puissance du transistor T₁₃ est reliée à la masse GND et la deuxième borne de puissance du transistor T₁₃ est reliée à une première électrode du condensateur C₄. La grille du transistor T₁₃ reçoit le deuxième signal de commande φ₂. Une première borne de puissance du transistor T₁₄ est reliée au noeud d'entrée IN et la deuxième borne de puissance du transistor T₁₄ est reliée à la deuxième électrode du condensateur C₄. La grille du transistor T₁₄ reçoit le deuxième signal de commande φ₂. Une première borne de puissance du transistor T₁₅ est reliée à la deuxième électrode du condensateur C₄ et la deuxième borne de puissance du transistor T₁₅ est reliée à la masse GND. La grille du transistor T₁₅ reçoit le premier signal de commande φ₁. Une première borne de puissance du transistor T₁₆ est reliée à la première électrode du condensateur C₄ et la deuxième borne de puissance du transistor T₁₆ est reliée au noeud de sortie OUT. La grille du transistor T₁₆ reçoit le premier signal de commande φ₁. Le substrat de chaque transistor T₁₃, T₁₄, T₁₅ et T₁₆ est relié à la masse GND.

Le fait que l'oscillateur 12 et le circuit d'interface 14 sont polarisés entre la tension -Vₑ et la tension Vₑ permet, de façon avantageuse, d'améliorer le fonctionnement du convertisseur 40. En effet, en fonctionnement, les transistors T₁₃, T₁₄, T₁₅ et T₁₆ sont davantage bloqués lorsque leurs grilles reçoivent la tension -Vₑ plutôt qu'à la masse GND. En outre, lors d'un démarrage à froid, tant que l'oscillateur n'a pas démarré, la tension Vₛ reste sensiblement à 0 V. Dès que l'oscillateur 12 a démarré, la tension Vₛ diminue en dessous de 0 V, de sorte que la fréquence d'oscillation de l'oscillateur 12 augmente plus rapidement que si l'oscillateur 12 était relié à la masse GND et la vitesse d'évolution du rapport de transformation du circuit à pompe de charges 10 est augmentée.

La figure 11 représente des courbes d'évolution Ck₁' et Ck₂', en fonction de la tension Vₑ, des rapports de transformation k₁' et k₂' respectivement du convertisseur 40 représenté en figure 10 et d'un convertisseur ayant la même structure que le convertisseur 40 à la différence que les transistors T₁₃ à T₁₆ sont remplacés par des transistors MOS à enrichissement à canal N. Les courbes Ck₁' et Ck₂' ont été obtenues pour des transistors MOS dont la longueur de canal était de 0,18 µm.

Pour les courbes Ck₁' et Ck₂', les rapports de transformation k₁' et k₂', qui sont négatifs, diminuent lorsque la tension Vₑ augmente. Toutefois, la diminution est plus rapide lorsque des transistors MOS à appauvrissement sont utilisés. En effet, le rapport de transformation k₁' diminue en dessous de -0,5 dès que la tension Vₑ augmente au-dessus de 200 mV alors que le rapport de transformation k₂' diminue en dessous de -0,5 seulement lorsque la tension Vₑ augmente au-dessus de 300 mV.

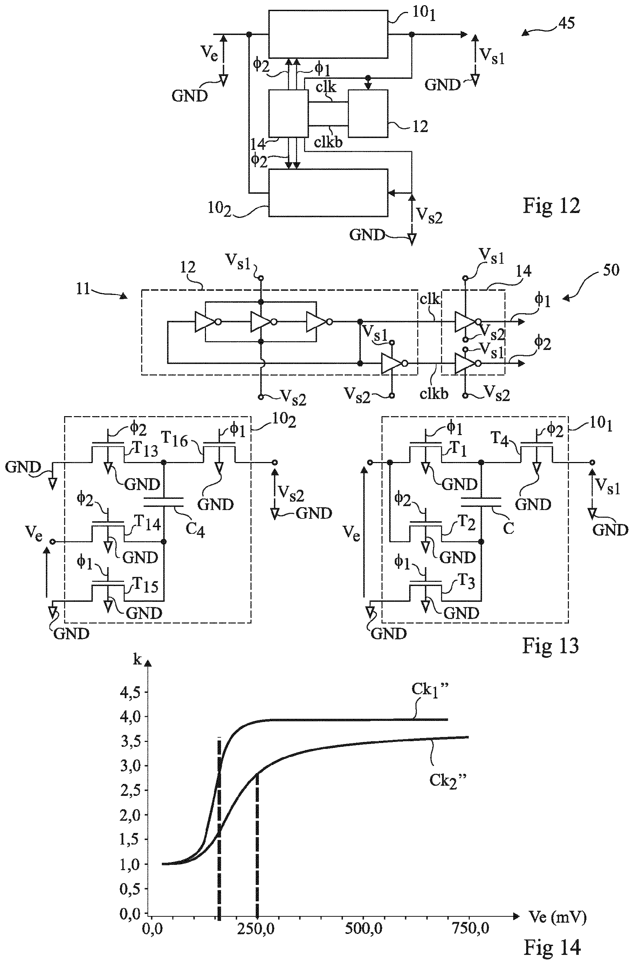

La figure 12 illustre, sous la forme d'un schéma-bloc, un autre mode de réalisation d'un convertisseur 45. Le convertisseur 45 comprend deux circuits à pompe de charges 10₁ et 10₂. Le circuit à pompe de charges 10₁ est adapté à fournir une tension positive Vₛ₁, de même signe que la tension Vₑ et le circuit à pompe de charges 10₂ est adapté à fournir une tension Vₛ₂ de signe opposé à la tension Vₑ. L'oscillateur 12 et le circuit d'interface 14 sont alimentés par la tension positive Vₛ₁ et la tension négative Vₛ₂. Le circuit d'interface 14 fournit les signaux de commande φ₁ et φ₂ aux deux circuits à pompe de charges 10₁ et 10₂. En fonctionnement normal, les signaux de commande φ₁ et φ₂ alternent entre la tension Vₛ₁, qui peut être supérieure à Vₑ, et la tension Vₛ₂, qui est négative. Ceci permet d'améliorer la conduction et le blocage des transistors MOS du circuit à pompe de charges 10₁ et 10₂. Le rapport de transformation du circuit à pompe de charges 10₁ est donc augmenté et s'approche davantage de la valeur maximale théorique. En outre, dès que l'oscillateur 12 a démarré, la tension Vₛ₁ est supérieure à la tension Vₑ et la tension Vₛ₂ diminue en dessous de 0 V, de sorte que la fréquence d'oscillation de l'oscillateur 12 augmente plus rapidement que si l'oscillateur 12 était relié à la tension Vₑ et à la masse GND et la vitesse d'évolution du rapport de transformation du circuit à pompe de charges 10 est augmentée.

La figure 13 représente, à titre d'exemple, un mode de réalisation d'un convertisseur 50, correspondant à un mode de réalisation plus détaillé du convertisseur 45 de la figure 12, dans lequel le circuit à pompe de charges 10₁ a la structure du circuit à pompe de charges 10 du convertisseur 5, dans lequel le circuit à pompe de charges 10₂ a la structure du circuit à pompe de charges 10 du convertisseur 40, dans lequel le circuit oscillant 11 a la structure du circuit oscillant 11 du convertisseur 10 à la différence que le circuit oscillant 11 est alimenté par la tension Vₛ₁ au lieu de la tension Vₑ et reçoit la tension Vₛ₂ au lieu d'être relié à la masse GND. Le circuit d'interface 14 fournit les signaux de commande φ₁ et φ₂ aux deux circuits à pompe de charges 10₁ et 10₂. En fonctionnement normal, les signaux de commande φ₁ et φ₂ alternent entre la tension Vₛ₁, qui, dans le présent mode de réalisation, est sensiblement égale à 2Vₑ, et la tension Vₛ₂, qui, dans le présent mode de réalisation, est sensiblement égale à -Vₑ.

La figure 14 est une figure analogue à la figure 7 pour le convertisseur 45 de la figure 12 dans le cas où le circuit à pompe de charges 10₁ est un élévateur de tension ayant la structure du circuit à pompe de charges du convertisseur 35 représenté en figure 9. La figure 14 représente des courbes d'évolution Ck₁" et Ck₂", en fonction de la tension Vₑ, des rapports de transformation k₁" et k₂" du circuit à pompe de charge 10₂ respectivement du convertisseur 45 et d'un convertisseur ayant la même structure que le convertisseur 45 à la différence que les transistors des circuits à pompe de charges 10₁ et 10₂ sont remplacés par des transistors MOS à enrichissement à canal N. Les courbes Ck₁" et Ck₂" ont été obtenues pour des transistors MOS dont la largeur de canal était de 0,18 µm.

Pour les courbes Ck₁" et Ck₂", le rapport de transformation k₁" et k₂" diminue lorsque la tension Vₑ diminue. Toutefois, la diminution est plus rapide lorsque des transistors MOS à enrichissement sont utilisés. En effet, le rapport de transformation k₂" diminue en dessous de 2,75 dès que la tension Vₑ diminue en dessous de 250 mV alors que le rapport de transformation k₁" diminue en dessous de 2,75 seulement lorsque la tension Vₑ diminue en dessous de 155 mV.

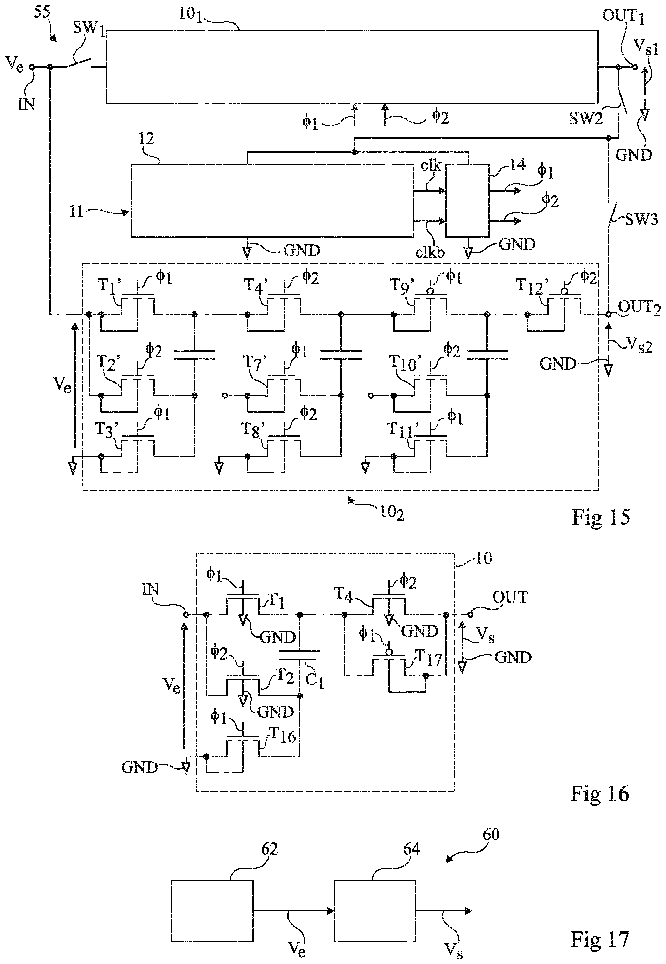

La figure 15 représente un autre mode de réalisation d'un convertisseur 55. Le convertisseur 55 comprend deux circuits à pompe de charges 10₁ et 10₂. Le circuit à pompe de charges 10₁ est relié au noeud d'entrée IN et fournit une tension Vₛ₁ à un noeud de sortie OUT₁. Le circuit à pompe de charges 10₁ peut correspondre à l'un quelconque des circuits à pompe de charges décrits précédemment en relation avec les figures 2, 8, 9, 10 ou 13. Le circuit à pompe de charges 10₂ est relié au noeud d'entrée IN et fournit une tension Vₛ₂ à un noeud de sortie OUT₂. Le circuit à pompe de charges 10₂ correspond à un amplificateur réalisé avec des transistors MOS à enrichissement. A titre d'exemple, le circuit à pompe de charges 10₂ peut correspondre à l'un quelconque des circuits à pompe de charges décrits précédemment en relation avec les figures 2, 8, 9, 10 ou 13 en remplaçant les transistors MOS à appauvrissement par des transistors MOS à enrichissement. En figure 15, le circuit à pompe de charges 10₂ représenté a la même structure que le circuit à pompe de charges 10 représenté en figure 9 à la différence que les transistors MOS à appauvrissement T₁ à T₄ et T₇ à T₁₂ ont été remplacés respectivement par des transistors MOS à enrichissement T₁' à T₄' et T₇' à T₁₂'. Le convertisseur 55 comprend l'oscillateur 12 et le circuit d'interface 14 tels que décrits précédemment. Selon un mode de réalisation, l'oscillateur 12 et le circuit d'interface 14 sont reliés au noeud de sortie OUT₁. Le circuit à pompe de charges 10₂ peut avoir la même structure que le circuit à pompe de charges 10₁ à la différence que les transistors MOS à appauvrissement du circuit à pompe de charges 10₁ sont remplacés par des transistors MOS à enrichissement.

Lors d'un démarrage à froid à faible tension Vₑ, le circuit à pompe de charges 10₁ qui fournit la tension Vₛ₁ démarre plus rapidement et sous une tension Vₑ plus faible que le circuit à pompe de charges 10₂. Le circuit à pompe de charges 10₂ ne démarre que lorsque la tension Vₛ₁ est supérieure à la tension de seuil des transistors MOS à enrichissement qui le composent. En effet, les signaux de commande φ₁ et φ₂ des grilles des transistors MOS à enrichissement du circuit à pompe de charges 10₂ varient sensiblement entre 0 V et Vₛ₁. Lorsque le circuit à pompe de charges 10₂ fonctionne normalement, il peut être avantageux d'utiliser la tension Vₛ₂ fournie par le circuit à pompe de charges 10₂ dans la mesure où le rendement de puissance, égal au rapport entre la puissance fournie par le circuit à pompe de charges et la puissance reçue par le circuit à pompe de charges, du circuit à pompe de charges 10₂ peut être supérieur au rendement de puissance du circuit à pompe de charges 10₁.

Selon un mode de réalisation, le circuit à pompe de charges 10₁ est relié au noeud d'entrée IN par un interrupteur SW1. De plus, l'oscillateur 12 et le circuit d'interface 14 sont reliés au noeud de sortie OUT₁ par un interrupteur SW₂ et au noeud de sortie OUT₂ par un interrupteur SW₃. Les interrupteurs SW₁, SW₂ et SW₃ sont commandés par un module de commande, non représenté, qui peut comprendre un circuit dédié. Selon un mode de réalisation, lors d'un démarrage à froid avec une faible tension Vₑ, les interrupteurs SW₁ et SW₂ sont fermés et l'interrupteur SW₃ est ouvert. Le circuit oscillant 11 est alors alimenté par la tension Vₛ₁. Le module de commande peut être adapté à comparer la tension Vₛ₁ à une tension de référence, par exemple égale à la somme de la tension de seuil des transistors MOS à enrichissement du circuit à pompe de charges 10₂ et d'une marge de sécurité. Lorsque la tension Vₛ₁ est supérieure à la tension de référence, le module de commande peut ouvrir l'interrupteur SW₁ pour augmenter le transfert d'énergie vers le circuit à pompe de charges 10₂. En outre, l'interrupteur SW₂ peut alors être ouvert et l'interrupteur SW₃ peut être fermé de façon que les circuits 12 et 14 soient alors alimentés par la tension Vₛ₂.

La figure 16 représente un autre mode de réalisation d'un circuit à pompe de charges 10 de type doubleur de tension. Le circuit à pompe de charges 10 représenté en figure 16 comprend l'ensemble des éléments du circuit à pompe de charges 10 décrit précédemment en relation avec la figure 2 à la différence que le transistor MOS à appauvrissement T₃ est remplacé par un transistor T₁₆ à enrichissement à canal N. Le substrat du transistor T₁₆ est relié à la masse GND. Ceci permet d'améliorer le rendement de puissance du convertisseur. De préférence, les transistors MOS à appauvrissement T₁ et T₂ ne sont pas remplacés par des transistors MOS à enrichissement de façon à ne pas dégrader les performances au démarrage du circuit à pompe de charges 10.

Un transistor MOS à enrichissement peut être prévu en parallèle d'un transistor MOS à appauvrissement pour au moins l'un des transistors MOS à appauvrissement du circuit à pompe de charges. Ceci permet d'améliorer le rendement de puissance du convertisseur tout en conservant les avantages liés à l'utilisation de transistors MOS à appauvrissement. A titre d'exemple, en figure 16, un transistor MOS à enrichissement T₁₇ à canal P peut être monté en parallèle du transistor MOS à appauvrissement T₄, une première borne de puissance du transistor T₁₇ étant connectée à la première électrode du condensateur C₁, la deuxième borne de puissance du transistor T₁₇ étant connectée au noeud de sortie OUT. La grille du transistor T₁₇ reçoit le signal de commande φ₁. Le substrat du transistor T₁₇ peut être relié au noeud de sortie OUT. Ceci permet d'améliorer le rendement de puissance du convertisseur.

La figure 17 représente un mode de réalisation d'un système de récupération d'énergie 60 comprenant un transducteur 62 adapté à fournir la tension Vₑ à un convertisseur 64 qui peut correspondre à l'un quelconque des convertisseurs 5, 30, 35, 40, 45, 50, 55 décrits précédemment. Le transducteur 62 peut être adapté à transformer en énergie électrique une autre forme d'énergie, par exemple de l'énergie thermique, de l'énergie mécanique ou de l'énergie radiative.

Des modes de réalisation particuliers ont été décrits. Diverses variantes et modifications apparaîtront à l'homme de l'art. En particulier, bien que, dans les modes de réalisation décrits précédemment, l'oscillateur 12 soit un oscillateur en anneau, il est clair que l'oscillateur 12 peut avoir une structure différente. A titre d'exemple, les modes de réalisation décrits précédemment peuvent être mis en oeuvre avec un oscillateur à relaxation.

En outre, on note que l'homme de l'art peut combiner divers éléments de ces divers modes de réalisation et variantes sans faire preuve d'activité inventive. A titre d'exemple, les modes de réalisation décrits précédemment en relation avec les figures 13 et 15 peuvent être combinés, le convertisseur pouvant comprendre deux circuits à pompe de charges utilisés pour fournir les deux tensions entre lesquelles le circuit oscillant est alimenté au démarrage comme cela est représenté en figure 13 et un circuit à pompe de charges à transistors MOS à enrichissement, tel que représenté en figure 15, utilisé pour fournir la tension de sortie du convertisseur une fois que le convertisseur a démarré.

## Revendications

1. Convertisseur continu-continu (5 ; 30 ; 35 ; 40 ; 45 ; 50 ; 55) comprenant un premier circuit à pompe de charges (10 ; 10₁) comprenant des premiers transistors MOS (T₁, T₂, T₃, T₄) dont des premiers transistors MOS à appauvrissement, et un circuit oscillant (11) relié au premier circuit à pompe de charges seulement aux grilles d'au moins certains des premiers transistors MOS dont les premiers transistors MOS à appauvrissement, dans lequel le premier circuit à pompe de charges (10 ; 10₁) comprend une première borne (IN) destinée à recevoir une première tension (Vₑ), au moins un condensateur (C₁) et au moins un chemin de conduction entre la première borne et une électrode du condensateur comprenant seulement l'un des premiers transistors MOS (T₁) à appauvrissement ou seulement desdits premiers transistors MOS à appauvrissement en série, dans lequel le premier circuit à pompe de charges (10 ; 10₁) est destiné à fournir une deuxième tension (Vₛ ; Vₛ₁), dans lequel le circuit oscillant (11) est alimenté par la deuxième tension, dans lequel le premier circuit à pompe de charges (10 ; 10₁) comprend, en outre, une deuxième borne (OUT ; OUT₁) destinée à fournir la deuxième tension (Vₛ ; Vₛ₁) et dans lequel le premier circuit à pompe de charges (10 ; 10₁) comprend au moins un chemin de conduction entre la première borne et la deuxième borne comprenant seulement desdits premiers transistors MOS à appauvrissement (T₁, T₄) en série.

2. Convertisseur selon la revendication 1, dans lequel le circuit oscillant (11) comprend un oscillateur en anneau (12).

3. Convertisseur selon la revendication 1 ou 2, dans lequel le circuit oscillant (11) est alimenté par la première tension (Vₑ).

4. Convertisseur selon l'une quelconque des revendications 1 à 3, comprenant un deuxième circuit à pompe de charges (10₂) comprenant des deuxièmes transistors MOS dont des deuxièmes transistors MOS à appauvrissement (T₁₃, T₁₄, T₁₅, T₁₆), le circuit oscillant (11) étant relié au deuxième circuit à pompe de charges seulement aux grilles d'au moins certains des deuxièmes transistors MOS dont les deuxièmes transistors MOS à appauvrissement, le deuxième circuit à pompe de charges comprenant une troisième borne destinée à recevoir la première tension (Vₑ) et une quatrième borne destinée à fournir une troisième tension (Vₛ₂) de signe opposé à la première tension, et dans lequel le circuit oscillant est alimenté entre la deuxième tension (Vₛ₁) et la troisième tension (Vₛ₂).

5. Convertisseur selon l'une quelconque des revendications 1 à 3, comprenant un troisième circuit à pompe de charges (10₂) comprenant seulement des troisièmes transistors MOS à enrichissement, le circuit oscillant (12, 14) étant, en outre, relié au troisième circuit à pompe de charges seulement aux grilles d'au moins certains des troisièmes transistors MOS à enrichissement, le troisième circuit à pompe de charges comprenant une cinquième borne destinée à recevoir la première tension (Vₑ) et une sixième borne destinée à fournir une quatrième tension (Vₛ₂) de même signe que la première tension.

6. Convertisseur selon la revendication 5, comprenant, en outre, un circuit de commutation (SW₁, SW₂, SW₃) adapté à alimenter successivement le circuit oscillant (11) avec la deuxième tension (Vₛ₁) et avec la quatrième tension (Vₛ₂).

7. Système électronique (60) de récupération d'énergie comprenant un transducteur (62) adapté à fournir une tension (Vₑ) à partir d'une source d'énergie et un convertisseur (60) selon l'une quelconque des revendications 1 à 6, le premier circuit à pompe de charges (10) recevant ladite tension.

## Patentansprüche

1. Gleichstrom-/Gleichstrom bzw. DC/DC-Wandler (5; 30; 35; 40; 45; 50; 55), der eine erste Ladepumpenschaltung (10; 10₁) aufweist, die erste MOS-Transistoren (T₁, T₂, T₃, T₄) aufweist, die erste Abbau-MOS-Transistoren umfassen, sowie eine Oszillationsschaltung (11), die mit der ersten Ladepumpenschaltung nur bei den Gattern bzw. Gates von zumindest einigen der ersten MOS-Transistoren verbunden ist, die die ersten Abbau-MOS-Transistoren aufweisen, wobei die erste Ladepumpenschaltung (10; 10₁) einen ersten Anschluss (IN), der eine erste Spannung (Vₑ) aufnehmen soll, zumindest einen Kondensator (C₁) und zumindest einen Leitungspfad zwischen dem ersten Anschluss und einer Elektrode des Kondensators aufweist, der nur einen der ersten Abbau-MOS-Transistoren (T₁) oder nur einige der ersten Abbau-MOS-Transistoren in Reihe aufweist, wobei die erste Ladepumpenschaltung (10; 10₁) eine zweite Spannung (Vₛ; Vₛ₁) liefern soll, wobei die Oszillationsschaltung (11) mit der zweiten Spannung beliefert wird, wobei die erste Ladepumpenschaltung (10; 10₁) ferner einen zweiten Anschluss (OUT; OUT₁) aufweist, der die zweite Spannung (Vₛ; Vₛ₁) liefern soll und wobei die erste Ladepumpenschaltung (10; 10₁) zumindest einen Leitungspfad zwischen dem ersten Anschluss und dem zweiten Anschluss aufweist, der nur einige der ersten Abbau-MOS-Transistoren (T₁, T₄) in Reihe aufweist.

2. Wandler gemäß Anspruch 1, wobei die Oszillationsschaltung (11) einen Ringoszillator (12) aufweist.

3. Wandler gemäß Anspruch 1 oder 2, wobei die Oszillationsschaltung (11) mit der ersten Spannung (Vₑ) angetrieben wird.

4. Wandler gemäß einem der Ansprüche 1 bis 3, der eine zweite Ladepumpenschaltung (10₂) aufweist, die zweite MOS-Transistoren aufweist, die zweite Abbau-MOS-Transistoren (T₁₃, T₁₄, T₁₅, T₁₆) aufweist, wobei die Oszillationsschaltung (11) mit der zweiten Ladepumpenschaltung nur an den Gattern bzw. Gates der zumindest einigen der zweiten MOS-Transistoren verbunden ist, die die zweiten Abbau-MOS-Transistoren aufweisen, wobei die zweite Ladepumpenschaltung einen dritten Anschluss aufweist, der die erste Spannung (Vₑ) aufnehmen soll, und einen vierten Anschluss, der eine dritte Spannung (Vₛ₂) mit einem Vorzeichen liefern soll, das dem der ersten Spannung entgegen gesetzt ist, und wobei die Oszillationsschaltung zwischen der zweiten Spannung (Vₛ₁) und der dritten Spannung (Vₛ₂) angetrieben wird.

5. Wandler gemäß einem der Ansprüche 1 bis 3, der eine dritte Ladepumpenschaltung (10₂) aufweist, die nur drei Verstärkungs-MOS-Transistoren aufweist, wobei die Oszillationsschaltung (12, 14) ferner mit der dritten Ladepumpenschaltung nur bei den Gates von zumindest einigen der dritten Verstärkungs-MOS-Transistoren verbunden ist, wobei die dritte Ladepumpenschaltung einen fünften Anschluss aufweist, der die erste Spannung (Vₑ) aufnehmen soll, sowie einen sechsten Anschluss, der eine vierte Spannung (Vₛ₂) des gleichen Vorzeichens wie die erste Spannung liefern soll.

6. Wandler gemäß Anspruch 5, der ferner einen Schaltkreis (SW₁, SW₂, SW₃) aufweist, der imstande ist, die Oszillationsschaltung (11) sukzessive mit der zweiten Spannung (Vₛ₁) und mit der vierten Spannung (Vₛ₂) anzutreiben.

7. Elektronisches Leistungsrückgewinnungssystem (60), das einen Transducer bzw. Geber (62) aufweist, der imstande ist, eine Spannung (Vₑ) von einer Leistungsquelle zu liefern, sowie den Wandler (60) gemäß einem der Ansprüche 1 bis 6, wobei die erste Ladepumpenschaltung (10) die Spannung aufnimmt.

## Claims

1. A DC/DC converter (5; 30; 35; 40; 45; 50; 55) comprising a first charge pump circuit (10; 10₁) comprising first MOS transistors (T₁, T₂, T₃, T₄) including first depletion MOS transistors, and an oscillating circuit (11) connected to the first charge pump circuit only at the gates of at least some of the first MOS transistors including the first depletion MOS transistors, wherein the first charge pump circuit (10; 10₁) comprises a first terminal (IN) intended to receive a first voltage (Vₑ), at least one capacitor (C₁), and at least one conduction path between the first terminal and an electrode of the capacitor comprising only one of the first depletion MOS transistors (T₁) or only some of said first depletion MOS transistors in series, wherein the first charge pump circuit (10; 10₁) is intended to supply a second voltage (Vₛ; Vₛ₁), wherein the oscillating circuit (11) is supplied with the second voltage, wherein the first charge pump circuit (10; 10₁) further comprises a second terminal (OUT; OUT₁) intended to supply the second voltage (Vₛ; Vₛ₁) and wherein the first charge pump circuit (10; 10₁) comprises at least one conduction path between the first terminal and the second terminal only comprising some of said first depletion MOS transistors (T₁, T₄) in series.

2. The converter of claim 1, wherein the oscillating circuit (11) comprises a ring oscillator (12).

3. The converter of claim 1 or 2, wherein the oscillating circuit (11) is powered with the first voltage (Vₑ).

4. The converter of any of claims 1 to 3, comprising a second charge pump circuit (10₂) comprising second MOS transistors including second depletion MOS transistors (T₁₃, T₁₄, T₁₅, T₁₆), the oscillating circuit (11) being connected to the second charge pump circuit only at the gates of at least some of the second MOS transistors including the second depletion MOS transistors, the second charge pump circuit comprising a third terminal intended to receive the first voltage (Vₑ) and a fourth terminal intended to supply a third voltage (Vₛ₂) of a sign opposite to that of the first voltage, and wherein the oscillating circuit is powered between the second voltage (Vₛ₁) and the third voltage (Vs₂).

5. The converter of any of claims 1 to 3, comprising a third charge pump circuit (10₂) only comprising third enhancement MOS transistors, the oscillating circuit (12, 14) being further connected to the third charge pump circuit only at the gates of some at least of the third enhancement MOS transistors, the third charge pump circuit comprising a fifth terminal intended to receive the first voltage (Vₑ) and a sixth terminal intended to supply a fourth voltage (Vₛ₂) of same sign as the first voltage.

6. The converter of claim 5, further comprising a switching circuit (SW₁, SW₂, SW₃) capable of successively powering the oscillating circuit (11) with the second voltage (Vₛ₁) and with the fourth voltage (Vₛ₂).

7. An electronic power recovery system (60) comprising a transducer (62) capable of supplying a voltage (Vₑ) from a power source and the converter (60) of any of claims 1 to 6, the first charge pump circuit (10) receiving said voltage.
